# EUROPÄISCHE PATENTSCHRIFT

(11) **EP 2 181 206 B1**
(45) Veröffentlichungstag und Bekanntmachung des Hinweises auf die Patenterteilung: **10.04.2019**
(21) Anmeldenummer: 08785578.9
(22) Anmeldetag: 16.08.2008
(51) Int. Cl.: D01F 6/46, D01D 5/098

(54) **VERFAHREN ZUR HERSTELLUNG VON SYNTHETISCHEN FILAMENTEN AUS EINER POLYPROPYLENEPOLYMERBLEND**
METHOD FOR PRODUCING SYNTHETIC FILAMENTS FROM A POLYPROPYLENE POLYMER BLEND
PROCÉDÉ DE PRODUCTION DE FILAMENTS SYNTHÉTIQUES À PARTIR D'UN MÉLANGE DE POLYMÈRE DE POLYPROPYLÈNE

(30) Priorität: 24.08.2007 EP 07016607
(43) Veröffentlichungstag der Anmeldung: 05.05.2010
(73) Patentinhaber: Reifenhäuser GmbH & Co. KG Maschinenfabrik, 53839 Troisdorf (DE)
(72) Erfinder: SCHLAG, Hans-Peter, 53944 Troisdorf (DE); SOMMER, Sebastian, 53844 Troisdorf (DE); FREY, Detlef, 53859 Niederkassel (DE)
(74) Vertreter: Rohmann, Michael
(86) Internationale Anmeldenummer: PCT/EP2008/006736
(87) Internationale Veröffentlichungsnummer: WO 2009/027021

(56) Entgegenhaltungen:
- EP-A- 1 609 890
- EP-A- 1 630 265
- WO-A-2007/140163
- US-A- 5 549 867
- US-A- 5 629 080

## Beschreibung

Die Erfindung betrifft ein Verfahren zur Herstellung von Spinnvliesen aus Kunststoff-Endlosfilamenten, insbesondere aus thermoplastischem Kunststoff, wobei die Endlosfilamente aus einem Kunststoff-Blend hergestellt werden. Kunststoff-Blend meint im Rahmen der Erfindung eine Kunststoffmischung bzw. Kunststofflegierung aus zumindest zwei Kunststoffen mit unterschiedlichen Eigenschaften und insbesondere eine homogene Mischung aus diesen Kunststoffen.

Verfahren zur Herstellung von Kunststoff-Endlosfilamenten sind aus der Praxis in verschiedenen Ausführungsvarianten bekannt. Die Endlosfilamente werden zunächst extrudiert, anschließend abgekühlt, darauf hin verstreckt und vorzugsweise auf einer Ablage zu einem Spinnvlies abgelegt. Die Verstreckung erfolgt zweckmäßigerweise pneumatisch. Es ist insbesondere bekannt auf diese Weise Endlosfilamente aus Polypropylen herzustellen. Ein Problem liegt darin, dass beim Spinnen bzw. beim Extrudieren und bei der pneumatischen Verstreckung der Filamente die Filamentgeschwindigkeit nicht beliebig gesteigert werden kann. Nach einem anfänglichen Anstieg der Filamentgeschwindigkeit über die Steuerung der Temperatur und der Verstreckbedingungen erreicht die Filamentgeschwindigkeit in der Regel eine Grenze, die es normalerweise nicht ermöglicht Polypropylen-Filamente mit einem Filamentdurchmesser kleiner bzw. deutlich kleiner als 1,0 den zu erzeugen. Das gilt insbesondere auch für das bekannte Reicofil-Verfahren bzw. Reicofil IV-Verfahren zur Herstellung von Polypropylen-Filamenten. Dabei ist es wesentlich, dass die Filamente produktionssicher verstreckt werden. Produktionssichere Verstreckung meint hier eine Verstreckung, die keine oder nur geringfügige Spinnstörungen zur Folge hat.

Demgegenüber liegt der Erfindung das technische Problem zugrunde ein Verfahren anzugeben, mit denen Polypropylen-Endlosfilamente mit möglichst geringen Filamentdurchmessern erzeugt werden können.

Zur Lösung dieses technischen Problems lehrt die Erfindung ein Verfahren zur Herstellung von Spinnvliesen aus Kunststoff-Endlosfilamenten aus thermoplastischem Kunststoff,
wobei die Endlosfilamente aus einem Kunststoff-Blend hergestellt werden, welches Kunststoff-Blend ein erstes Polypropylen mit einem Schmelzflussindex (MFi) von 40 bis 70 g/10 Min. und ein zweites Polypropylen mit einem Schmelzflussindes (MFI) von 300 bis 3000 g/10 Min. enthält,
wobei die Endlosfilamente aus einer Spinndüse extrudiert werden, wobei die Endlosfilamente anschließend in einer Kühlkammer durch Zuführung von Kühlluft gekühlt werden und daraufhin in einer Verstreckeinheit aerodynamisch verstreckt werden und wobei in das Aggregat aus Kühlkammer und Verstreckeinheit außer der Zuführung der Kühlluft keine weitere Luft von außen zugeführt wird,
wobei die Verstreckbedingungen bei der aerodynamischen Verstreckung mit der Maßgabe eingestellt werden, dass Endlosfilamente mit einem Titer kleiner 0,8 den erhalten werden und
wobei die Endlosfilamente nach der aerodynamischen Verstreckung auf eine Ablage zu einem Spinnvlies abgelegt werden. - Der Schmelzflussindex (MFI) wird im Rahmen der Erfindung nach EN ISO 1133 bei einer Prüftemperatur von 230° C und bei einer Nennmasse von 2,16 kg gemessen.

Es liegt im Rahmen der Erfindung, dass das Kunststoff-Blend lediglich die beiden Polypropylene (erstes und zweites Polypropylen) als Kunststoffbestandteile aufweist. Es liegt fernerhin im Rahmen der Erfindung, dass das Kunststoff-Blend neben den zumindest zwei Polypropylenen übliche Kunststoffzusätze enthält. Die Erfindung umfasst auch eine Ausführungsform, bei der neben den beiden Polypropylenen zumindest ein weiteres Polymer in dem Kunststoff-Blend enthalten ist. Eine besonders bevorzugte Ausführungsform der Erfindung ist dadurch gekennzeichnet, dass der Kunststoffanteil des ersten und des zweiten Polypropylens in dem Kunststoff-Blend insgesamt mehr als 90 Gew.-%, vorzugsweise mehr als 95 Gew.-% und bevorzugt mehr als 98 Gew.-% beträgt.

Nach der Erfindung weist das erste Polypropylen einen Schmelzflussindex von 40 bis 70 g/10 Min. auf. Es empfiehlt sich weiterhin, dass das zweite Polypropylen einen Schmelzflussindex von 300 bis 1.600 g/10 Min. zweckmäßigerweise von 350 bis 1.550 g/10 Min. und vorzugsweise von 400 bis 1.500 g/10 Min. aufweist. Erfindungsgemäß ist dabei der Schmelzflussindex des ersten Polypropylens kleiner als der Schmelzflussindex des zweiten Polypropylens.

Es liegt im Rahmen der Erfindung, dass zumindest das zweite Polypropylen mit Hilfe eines Ziegler-Natta-Katalysators und/oder mit Hilfe eines Metallocen-Katalysators hergestellt ist. Das zweite Polypropylen und/oder das erste Polypropylen kann als Homopolymer oder Copolymer synthetisiert werden. Nach einer besonderen Ausführungsform der Erfindung wird ein mit zumindest einem Ziegler-Natta-Katalysator und/oder mit zumindest einem Metallocen-Katalysator hergestelltes Polypropylen mit zumindest einem Peroxid zwecks Erzeugung des zweiten Polypropylens gemischt bzw. zur Einstellung des Schmelzflussindex des zweiten Polypropylens gemischt. Die Einstellung des Schmelzflussindex des zweiten Polypropylens erfolgt dabei durch Kettenabbau mit Hilfe des zumindest einen Peroxids. Auf diese Weise können insbesondere Schmelzflussindizes größer als 400 g/10 Min. hergestellt werden. Die Erzeugung des zweiten Polypropylens aus dem genannten Polypropylen und dem zumindest einen Peroxid erfolgt zweckmäßigerweise in einem Extruder.

Gemäß einer empfohlenen Ausführungsform der Erfindung ist das zweite Polypropylen (mit dem höheren Schmelzflussindex) zu 0,1 bis 50 Gew.-%, vorzugsweise zu 0,5 bis 20 Gew.-%, zweckmäßigerweise zu 0,5 bis 15 Gew.-% und bevorzugt zu 1 bis 10 Gew.-% in dem Kunststoff-Blend enthalten. Es liegt dabei im Rahmen der Erfindung, dass der Rest des Kunststoff-Blends aus dem ersten Polypropylen und ggf. Kunststoffzusätzen besteht.

Das erfindungsgemäße Kunststoff-Blend kann sowohl für Monokomponentenfilamente als auch für Bikomponentenfilamente bzw. Multikomponentenfilamente eingesetzt werden. Gemäß einer Ausführungsform der Erfindung ist das erfindungsgemäße Kunststoff-Blend dabei in der ersten Komponente enthalten und die zweite Komponente bzw. die weiteren Komponenten bestehen aus einem anderem Kunststoff bzw. Polymer. Nach einer weiteren Ausführungsform der Erfindung ist in der ersten Komponente ein erfindungsgemäßes Kunststoff-Blend enthalten und in der zweiten Komponente bzw. in den weiteren Komponenten ist ebenfalls jeweils ein erfindungsgemäßes Kunststoff-Blend enthalten, das sich jedoch von dem Kunststoff-Blend der ersten Komponente unterscheidet.

Entsprechend betrifft die Erfindung ein Verfahren zur Herstellung und Verarbeitung von Kunststoff-Filamenten aus einem Kunststoff-Blend, wobei ein erstes Polypropylen mit einem Schmelzflussindex (MFI) von 40 bis 70 g/10 Min. mit einem zweiten Polypropylen mit einem Schmelzflussindex von 300 bis 3.000 g/10 Min. zu dem Kunststoff-Blend gemischt wird und wobei aus diesem Kunststoff-Blend die Kunststoff-Filamente extrudiert werden. Das erste Polypropylen weist einen Schmelzflussindex von 40 bis 70 g/10 Min., vorzugsweise von 40 bis 60 g/10 Min. auf. Vorzugsweise weist das zweite Polypropylen einen Schmelzflussindex von 300 bis 1.600 g/10 Min., vorzugsweise von 400 bis 1.500 g/10 Min auf.

Eine sehr bevorzugte Ausführungsform des erfindungsgemäßen Verfahrens ist dadurch gekennzeichnet, dass Kunststoff-Filamente mit einem Titer von kleiner oder gleich 0,7 den hergestellt werden. Es liegt dabei im Rahmen der Erfindung, dass insbesondere die Verstreckbedingungen entsprechend eingestellt werden. Der Erfindung liegt insoweit die Erkenntnis zugrunde, dass die Verstreckung der aus einem erfindungsgemäßen Kunststoff-Blend hergestellten Kunststoff-Filamente problemlos so durchgeführt werden kann, dass Filamente mit den vorgenannten Filamentdurchmessern bzw. Titern erzeugt werden können. Diese Titerwerte beziehen sich im Übrigen auf die auf einer Ablage abgelegten Filamente bzw. auf die zur Spinnvliesbahn abgelegten Filamente.

Erfindungsgemäß werden die Kunststoff-Filamente nach ihrer Extrusion aus einer Spinndüse abgekühlt und anschließend aerodynamisch verstreckt. Die Kunststoff-Filamente werden nach der Verstreckung auf einer Ablage abgelegt bzw. zu einem Spinnvlies auf einer Ablage abgelegt. Bei der Ablage handelt es sich empfohlenermaßen um ein kontinuierlich umlaufendes Ablegesiebband. Nach einer bevorzugten Ausführungsform der Erfindung ist zwischen einer Verstreckeinheit zur Verstreckung der Kunststoff-Filamente und der Ablage zumindest ein Diffusor zwischengeschaltet, durch den die Kunststoff-Filamente geführt werden.

Die erfindungsgemäß erzeugten Kunststoff-Filamente bestehen nach einer sehr bevorzugten Ausführungsform der Erfindung zu mehr als 90 Gew.-%, vorzugsweise zu mehr als 95 Gew.-%, bevorzugt zu mehr als 98 Gew.-% und sehr bevorzugt mindestens zu 99 Gew.-% aus dem erfindungsgemäßen Kunststoff-Blend.

Der Erfindung liegt die Erkenntnis zugrunde, dass mit einem erfindungsgemäßen Kunststoff-Blend bzw. mit Kunststoff-Filamenten aus einem erfindungsgemäßen Kunststoff-Blend die Filamentgeschwindigkeit nach dem Austreten aus der Spinndüse und die Spinnstabilität gegenüber den aus der Praxis bekannten Maßnahmen beachtlich gesteigert werden kann. Auf diese Weise können Filamente hoher Qualität mit Filamentdurchmessern von weniger als 0,8 den erreicht werden. Hervorzuheben ist dabei, dass die geringen Filamentdurchmesser bzw. Titer durch relativ einfache und wenig aufwendige Maßnahmen erzielt werden können. Das erfindungsgemäße Verfahren kann mit verhältnismäßig geringen Kosten durchgeführt werden und nichtsdestoweniger werden beachtliche Vorteile insbesondere im Hinblick auf die Filamentgeschwindigkeit und die Filamentdurchmesser erreicht.

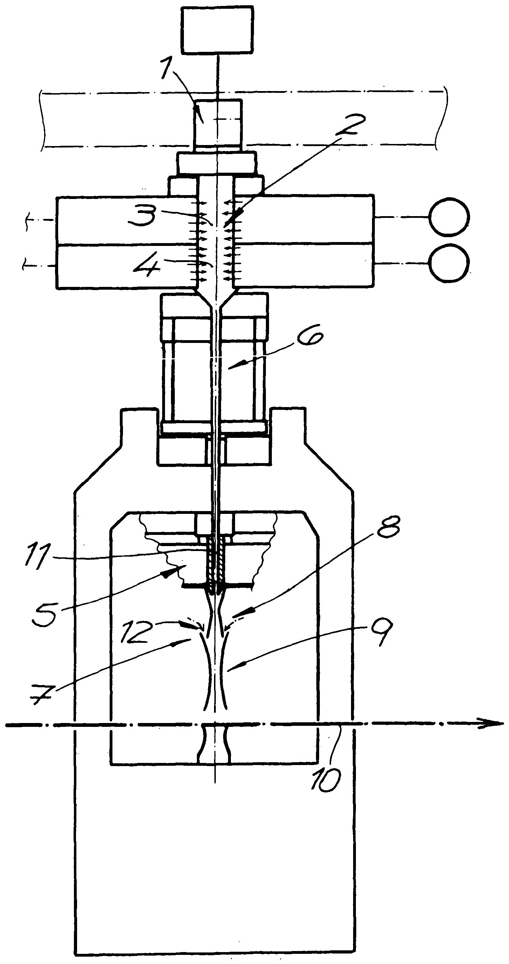

Nachfolgend wird die Erfindung anhand einer lediglich ein Ausführungsbeispiel darstellenden Zeichnung näher erläutert. Die einzige Figur zeigt einen Vertikalschnitt durch eine Vorrichtung zur Durchführung des erfindungsgemäßen Verfahrens.

Die in der Figur dargestellte Vorrichtung dient zur Herstellung von Spinnvliesen aus Kunststoff-Filamenten, die aus dem erfindungsgemäßen Kunststoff-Blend bzw. im Wesentlichen aus dem erfindungsgemäßen Kunststoff-Blend bestehen. Im Ausführungsbeispiel mag es sich um Monokomponentenfilamente handeln, die vollständig aus dem erfindungsgemäßen Kunststoff-Blend bestehen. Die Vorrichtung weist eine Spinnerette 1 zur Erzeugung bzw. zum Spinnen der Kunststoff-Filamente auf. Der Spinnerette 1 ist eine Kühlkammer 2 nachgeschaltet, in der die Kunststoff-Filamente mit zugeführter Prozessluft gekühlt werden. Die Kühlkammer 2 ist nach bevorzugter Ausführungsform und im Ausführungsbeispiel in zwei Kühlkammerabschnitte 3, 4 unterteilt, in denen die Kunststoff-Filamente jeweils mit Prozessluft unterschiedlicher Temperatur gekühlt werden. Eine bevorzugte Ausführungsform ist dadurch gekennzeichnet, dass die Temperatur der Prozessluft mit der die Kunststoff-Filamente in dem ersten oberen Kühlkammerabschnitt 3 beaufschlagt werden, höher ist als die Temperatur der Prozessluft mit der die Kunststoff-Filamente in dem zweiten unteren Kühlkammerabschnitt 4 beaufschlagt werden.

Im Anschluss an die Kühlkammer 2 ist eine Verstreckeinheit 5 vorgesehen, in der die Kunststoff-Filamente aus dem erfindungsgemäßen Kunststoff-Blend aerodynamisch verstreckt werden. Die Kühlkammer 2 ist im Ausführungsbeispiel über einen Zwischenkanal 6 mit der Verstreckeinheit 5 verbunden. Die Verstreckeinheit 5 weist im Übrigen einen Unterziehkanal 11 auf. Der Anschlussbereich zwischen Kühlkammer 2 und Verstreckeinheit 5 ist geschlossen ausgebildet. In diesem Übergangsbereich und insbesondere im Bereich des Zwischenkanals 6 wird keine Luft von außen in den Strömungsweg der Kunststoff-Filamente eingeführt. Gemäß einer empfohlenen Ausführungsform verläuft der Zwischenkanal 6 von der Kühlkammer 2 zur Verstreckeinheit 5 hin konvergierend. Bei dieser empfohlenen Ausführungsform verjüngt sich der Zwischenkanal 6 also von der Kühlkammer 2 zur Verstreckeinheit 5.

Vorzugsweise und im Ausführungsbeispiel schließt an die Verstreckeinheit 5 eine Verlegeeinheit 7 an, die nach bevorzugter Ausführungsform zumindest einen Diffusor 8, 9 aufweist. Zweckmäßigerweise und im Ausführungsbeispiel besteht die Verlegeeinheit 11 aus einem ersten Diffusor 8 und einem zweiten Diffusor 9. Vorzugsweise und im Ausführungsbeispiel ist zwischen dem ersten Diffusor 8 und dem zweiten Diffusor 9 ein Umgebungslufteintrittsspalt 12 vorgesehen. Jeder Diffusor 8, 9 weist im Ausführungsbeispiel ein oberes konvergierendes Teil sowie ein unteres divergierendes Teil auf. Dementsprechend hat jeder Diffusor 8, 9 eine engste Stelle zwischen dem oberen konvergierenden Teil und dem unteren divergierenden Teil. Vorzugsweise sind die Diffusorwände zumindest im divergierenden Teil des ersten Diffusors 8 und/oder des zweiten Diffusors 9 verstellbar, so dass der Öffnungswinkel des jeweiligen divergierenden Teils einstellbar ist.

Unterhalb der Verlegeeinheit 7 werden die Kunststoff-Filamente auf einer als Ablegesiebband 10 ausgebildeten Ablage zum Spinnvlies bzw. zur Spinnvliesbahn abgelegt. Unter dem Ablegesiebband 10 ist vorzugsweise zumindest eine in der Figur nicht näher dargestellte Saugeinrichtung vorgesehen. Mit dieser Saugeinrichtung wird während des Ablegens des Kunststoff-Filamente Luft durch das Ablegesiebband 10 gesaugt.

Mit der in der Figur dargestellten Vorrichtung wird nach dem Reicofil IV-Verfahren gearbeitet. Das Reicofil IV-Verfahren wird in EP 1 340 843 A1 beschrieben. Das erfindungsgemäße Kunststoff-Blend ist für das Reicofil IV-Verfahren besonders geeignet und nach diesem Verfahren können auf sehr einfache und problemlose Weise Kunststoff-Filamente mit sehr geringen Filamentdurchmessern kleiner als 0,8 den erzeugt werden. Besondere Bedeutung kommt in diesem Zusammenhang auch dem erfindungsgemäßen Merkmal zu, dass im Bereich der Kühlkammer 2 und des Zwischenkanals 6 sowie insbesondere im Übergangsbereich zwischen Kühlkammer 2 und Zwischenkanal 6 keine Luftzufuhr von außen vorgesehen ist, abgesehen von der Zufuhr der Prozessiuft bzw. Kühiiuft zur Kühlung der Kunststoff-Filamente in der Kühlkammer 2. Man spricht hier von einem so genannten geschlossenen System. Erfindungsgemäß findet im gesamten Aggregat aus Kühlkammer 2 und Verstreckeinheit 5 abgesehen von der genannten Zuführung der Prozessluft bzw. Kühlluft keine weitere Luftzufuhr von außen statt.

## Patentansprüche

1. Verfahren zur Herstellung von Spinnvliesen aus Kunststoff-Endlosfilamenten aus thermoplastischem Kunststoff,
wobei die Endlosfilamente aus einem Kunststoff-Blend hergestellt werden, welches Kunststoff-Blend ein erstes Polypropylen mit einem Schmelzflussindex (MFI) von 40 bis 70 g/10 Min. und ein zweites Polypropylen mit einem Schmelzflussindex (MFI) von 300 bis 3.000 g/10 Min. enthält,
wobei die Endlosfilamente aus einer Spinndüse extrudiert werden, wobei die Endlosfilamente anschließend in einer Kühlkammer durch Zuführung von Kühlluft gekühlt werden und darauf hin in einer Verstreckeinheit aerodynamisch verstreckt werden und wobei in das Aggregat aus Kühlkammer und Verstreckeinheit außer der Zuführung der Kühlluft keine weitere Luft von außen zugeführt wird,
wobei die Verstreckbedingungen bei der aerodynamischen Verstreckung mit der Maßgabe eingestellt werden, dass Endlosfilamente mit einem Titer kleiner 0,8 den erhalten werden und
wobei die Endlosfilamente nach der aerodynamischen Verstreckung auf eine Ablage zu einem Spinnvlies abgelegt werden.

2. Verfahren nach Anspruch 1, wobei der Kunststoffanteil des ersten und des zweiten Polypropylens in dem Kunststoff-Blend mehr als 90 Gew.-%, vorzugsweise mehr als 95 Gew.-% beträgt.

3. Verfahren nach einem der Ansprüche 1 oder 2, wobei das zweite Polypropylen einen Schmelzflussindex von 300 bis 1.600 g/10 Min., vorzugsweise von 400 bis 1.500 g/10 Min. aufweist.

4. Verfahren nach einem der Ansprüche 1 bis 3, wobei das zweite Polypropylen mittels zumindest eines Ziegler-Natta-Katalysators und/oder mittels zumindest eines Metallocen-Katalysators hergestellt ist.

5. Verfahren nach einem der Ansprüche 1 bis 4, wobei das zweite Polypropylen zu 0,1 bis 50 Gew.-%, vorzugsweise zu 0,5 bis 20 Gew.-% und bevorzugt zu 1 bis 10 Gew.-% in dem Kunststoff-Blend enthalten ist.

6. Verfahren nach einem der Ansprüche 1 bis 5, wobei die Kunststoff-Filamente mit einem Titer von kleiner oder gleich 0,7 den hergestellt werden.

7. Verfahren nach einem der Ansprüche 1 bis 6, wobei die Kunststoff-Filamente nach ihrer Extrusion in eine Kühlkammer (2) eingeführt werden, die in zumindest zwei Kühlkammerabschnitte (3, 4) unterteilt ist, in denen die Kunststoff-Filamente jeweils mit Prozessluft mit unterschiedlichem konvektiven Wärmeabfuhrvermögen in Kontakt kommen.

## Claims

1. A method for the manufacture of spunbonded fabrics of continuous plastic filaments of thermoplastic plastic, wherein
the continuous filaments are manufactured from a plastic blend, which plastic blend contains a first polypropylene having a melt flow index (MFI) of 40 to 70 g/10 min and a second polypropylene having a melt flow index (MFI) of 300 to 3,000 g/10 min,
wherein the continuous filaments are extruded from a spinneret, wherein the continuous filaments are subsequently cooled in a cooling chamber by the supply of cooling air and thereafter are aerodynamically stretched in a stretching unit, and wherein no further air is supplied from outside into the assembly of cooling chamber and stretching unit apart from the supply of the cooling air,
wherein the stretching conditions during the aerodynamic stretching are adjusted with the proviso that continuous filaments are obtained with a titre of less than 0.8 den, and
wherein the continuous filaments after the aerodynamic stretching are deposited on a depositing device to form a spunbonded fabric.

2. The method according to claim 1, wherein the plastic component of the first and the second polypropylene in the plastic blend amounts to more than 90% by weight, preferably more than 95% by weight.

3. The method according to one of claims 1 or 2, wherein the second polypropylene has a melt flow index of 300 to 1,600 g/10 min, preferably of 400 to 1,500 g/10 min.

4. The method according to one of claims 1 to 3, wherein the second polypropylene is manufactured by means of at least one Ziegler-Natta catalyst and/or by means of at least one metallocene catalyst.

5. The method according to one of claims 1 to 4, wherein the second polypropylene is contained in the plastic blend in the amount of 0.1 to 50% by weight, preferably in the amount of 0.5 to 20% by weight, and preferably in the amount of 1 to 10% by weight.

6. The method according to one of claims 1 to 5, wherein the plastic filaments are manufactured with a titre of less than or equal to 0.7 den.

7. The method according to one of claims 1 to 6, wherein the plastic filaments after their extrusion are introduced into a cooling chamber (2) which is subdivided into at least two cooling chamber sections (3, 4), in which the plastic filaments each come into contact with process air having a different convective heat removal capability.

## Revendications

1. Procédé, destiné à fabriquer des filés-liés en filaments continus de matière plastique, à partir de matière thermoplastique,
lors duquel on fabrique les filaments continus en un mélange de matières plastiques, lequel mélange de matières plastiques contient un premier propylène avec un indice de fluage (MFI) de 40 à 70 g/10 minutes et un deuxième propylène avec un indice de fluage (MFI) de 300 à 3.000 g/10 minutes,
lors duquel, on extrude les filaments continus à partir d'une filière, lors duquel on fait refroidir par la suite les filaments continus par apport d'air de refroidissement dans une chambre de refroidissement, suite à quoi, on les étire de manière aérodynamique dans un ensemble d'étirage et lors duquel, dans le groupe constitué de la chambre de refroidissement et de l'ensemble d'étirage, hormis l'air de refroidissement, on ne procède à aucun autre apport d'air supplémentaire par l'extérieur,
les conditions d'étirage lors de l'étirage aérodynamique étant réglées avec le critère consistant à obtenir des filaments continus d'un titre inférieur à 0,8 den
lors duquel, après l'étirage aérodynamique, on dépose les filaments continus sur un support pour former un filé-lié.

2. Procédé selon la revendication 1, la part en matière plastique dans le premier et deuxième propylènes dans le mélange de matières plastiques étant supérieure à 90 % en poids, de préférence supérieure à 95 % en poids.

3. Procédé selon l'une quelconque des revendications 1 ou 2, le deuxième propylène présentant un indice de fluage de 300 à 1.600 g/10 minutes, de préférence de 400 à 1.500 g/10 minutes.

4. Procédé selon l'une quelconque des revendications 1 à 3, le deuxième propylène étant fabriqué à l'aide d'au moins un catalyseur de Ziegler-Natta et/ou à l'aide d'au moins un catalyseur de métallocène.

5. Procédé selon l'une quelconque des revendications 1 à 4, le deuxième propylène étant contenu dans le mélange de matières plastiques à raison de 0,1 à 50 % en poids, de préférence à raison de 0,5 à 20 % en poids et de manière préférentielle, à raison de 1 à 10 % en poids.

6. Procédé selon l'une quelconque des revendications 1 à 5, lors duquel on fabrique les filaments en matière plastique avec un titre inférieur ou égal à 0,7.

7. Procédé selon l'une quelconque des revendications 1 à 6, lors duquel, après leur extrusion, on introduit les filaments de matière plastique dans une chambre de refroidissement (2) qui est divisée en au moins deux segments de chambre de refroidissement (3, 4) dans lesquels les filaments de matière plastique entrent respectivement en contact avec de l'air de processus avec différentes capacités de dissipation convective.
